# DEMANDE DE BREVET EUROPEEN

(11) **EP 1 467 462 A1**
(43) Date de publication de la demande: **13.10.2004**
(21) Numéro de dépôt: 04356048.1
(22) Date de dépôt: 08.04.2004
(51) Int. Cl.: H02H 7/122, H02H 1/04

(54) **Procédé et système de commande d'urgence de la commutation d'un transistor de puissance**

(30) Priorité: 09.04.2003 FR 0304405
(71) Demandeur: Alstom, 75116 Paris (FR)
(72) Inventeur: Lepage, Jean-Pierre, 65800 Aureilhan (FR)
(74) Mandataire: Colombo, Michel

(57) **Abrégé**

Ce procédé de commande d'urgence de la commutation d'un transistor de puissance en cas de dysfonctionnement de ce transistor, comporte :
- une étape (62) de mesure d'une tension entre le collecteur et l'émetteur du transistor de puissance,
- une étape (66) de filtrage temporel du signal mesuré,
- une étape (68) de détection de l'état anormal de fonctionnement réalisée à partir des valeurs du signal filtré, et
- une étape (76) de commande de la commutation du transistor de puissance vers un état de sécurité, déclenchée immédiatement lorsqu'un état anormal de fonctionnement est détecté.

## Description

L'invention concerne un procédé et un système de commande d'urgence de la commutation d'un transistor de puissance en cas d'état anormal de ce dernier, et plus précisément un procédé de commande comportant :
- une étape de mesure d'un signal représentatif d'une tension entre le collecteur et l'émetteur du transistor de puissance lorsque le transistor de puissance est passant,
- une étape de surveillance de l'état de fonctionnement du transistor de puissance à partir des valeurs mesurées dudit signal, et
- une étape de commande de la commutation du transistor de puissance vers un état de sécurité, cette étape étant déclenchée immédiatement lorsqu'un état anormal de fonctionnement est détecté lors de l'étape de surveillance.

Les transistors de puissance, et en particulier les IGBT (Insulated Gate Bipolar Transistor) sont utilisés dans de nombreux circuits électroniques de puissance tels que des onduleurs triphasés destinés à alimenter une machine électrique tournante.

A titre d'illustration, les onduleurs triphasés alimentant les moteurs d'un train ou d'un métro utilisent ces transistors de puissance. Dans de telles applications il est important de détecter le plus rapidement possible un état anormal ou dysfonctionnement d'un transistor de puissance de manière à éviter tout endommagement du circuit électronique, voire de la machine électrique tournante alimentée par ce circuit.

Un tel état anormal d'un transistor de puissance est par exemple détecté en surveillant la tension V_{CE} entre le collecteur et l'émetteur de ce transistor de puissance lorsque celui-ci est passant. En effet, lorsque le transistor de puissance est passant, il est connu que la tension V_{CE} doit être inférieure à un seuil donné par le constructeur de ce transistor, par exemple 5V.

Pour surveiller cette tension, le procédé connu consiste à mesurer la tension V_{CE} et à la comparer à un seuil fixe S. Si la tension V_{CE} mesurée pendant l'état passant du transistor de puissance est supérieure au seuil S, cela signifie qu'un état anormal est présent. En cas de présence d'un état anormal, la commande normale du transistor de puissance est interrompue et celui-ci reçoit une instruction de commutation d'urgence vers un état sûr, c'est-à-dire par exemple vers l'état bloqué ou ouvert. Dans le cas contraire, c'est-à-dire si la tension V_{CE} mesurée reste inférieure à 5V, alors l'état du transistor de puissance est normal et aucune commutation d'urgence n'est nécessaire.

Ce procédé est mis en oeuvre par un circuit électronique de détermination d'état anormal du transistor de puissance. Ce circuit est raccordé au transistor de puissance et placé à proximité de celui-ci pour pouvoir réagir rapidement, c'est-à-dire dans un temps de l'ordre de la microseconde.

Toutefois, l'environnement à proximité du transistor de puissance est extrêmement bruité d'un point de vue électromagnétique et la qualité de la tension V_{CE} mesurée en est affectée. En particulier, la tension V_{CE} présente de nombreux pics ou perturbations de tension transitoires dont l'amplitude maximale est très supérieure au seuil de 5V. Pour ne pas interrompre le fonctionnement du transistor de puissance à chaque pic de tension transitoire, la solution actuelle consiste à régler la valeur du seuil S à une valeur nettement supérieure à 5V, par exemple 100V.

Cette solution est basée sur le fait que la plupart des perturbations ou pics transitoires ont une amplitude limitée. Toutefois, cette solution présente l'inconvénient qu'un état véritablement anormal est détecté très tard, c'est-à-dire lorsque la tension V_{CE} dépasse déjà 100V. Il est alors souvent trop tard pour réagir et empêcher que des dommages irréversibles soient causés au transistor de puissance. Ainsi, cette solution s'avère en pratique peu efficace.

L'invention vise à remédier à cet inconvénient en proposant un procédé de commande d'urgence d'un transistor de puissance en cas de dysfonctionnement de ce dernier plus efficace.

L'invention a donc pour objet un procédé de commande d'urgence d'un transistor de puissance tel que décrit ci-dessus caractérisé en ce que l'étape de surveillance comporte :
- une sous-étape de filtrage temporel du signal mesuré de manière à éliminer toutes les perturbations transitoires dudit signal dont les durées sont inférieures à une durée prédéterminée, et
- une sous-étape de détection de l'état anormal de fonctionnement réalisée à partir des valeurs du signal dans lequel les perturbations transitoires ont été filtrées.

Contrairement aux procédés connus, le procédé ci-dessus comporte une étape de filtrage temporel du signal représentatif de la tension V_{CE} de manière à éliminer de ce signal les perturbations dont les durées sont inférieures à un intervalle de temps prédéterminé Δₜ.

La détection et la décision sur la présence d'un état anormal n'est prise que sur la base du signal ainsi filtré de sorte que cette décision n'est pas affectée par la présence de perturbations transitoires, c'est-à-dire de perturbations dont la durée est inférieure à l'intervalle Δₜ. Ainsi, ce procédé est plus efficace que les procédés connus puisque l'interruption du fonctionnement normal du transistor de puissance n'est réalisée que lorsque cela s'avère véritablement nécessaire.

Suivant d'autres caractéristiques du procédé conforme à l'invention :
- la sous-étape de filtrage temporel consiste à détecter le début d'une perturbation transitoire et à ne réaliser la sous-étape de détection qu'après que l'intervalle de temps prédéterminé se soit écoulé, l'intervalle de temps étant compté à partir de la détection du début de la perturbation,
- le début de la perturbation est détecté en comparant la valeur instantanée du signal mesuré à un premier seuil,
- la sous-étape de détection de l'état anormal comporte une opération de comparaison de la valeur instantanée dudit signal mesuré avec un deuxième seuil, et l'étape de commande est déclenchée uniquement si le résultat de cette comparaison avec le deuxième seuil indique que la perturbation est toujours présente après que l'intervalle de temps prédéterminé se soit écoulé,
- l'étape de surveillance comporte une sous-étape de prévention d'un état de fonctionnement destructif consistant à déclencher immédiatement l'étape de commande dès que la valeur instantanée dudit signal mesuré dépasse un troisième seuil au-delà duquel le transistor de puissance risque d'être endommagé,
- ce procédé comporte une étape d'initialisation de l'intervalle de temps prédéterminé à une valeur constante avant de réaliser la sous-étape de filtrage,
- il comporte une étape d'initialisation du ou de chaque seuil à une valeur constante, avant la sous-étape de filtrage,
- la sous-étape de filtrage comporte une opération de filtrage numérique dudit signal mesuré, la sous-étape de détection comporte une opération de comparaison du signal filtré à un seuil prédéterminé, le résultat de cette comparaison étant représentatif de la présence ou de l'absence d'un état anormal de fonctionnement, et l'étape de commande est déclenchée uniquement si le résultat de la comparaison indique qu'un état anormal de fonctionnement est présent.

L'invention a également pour objet un système de commande d'urgence de la commutation d'un transistor de puissance, en cas de dysfonctionnement de ce transistor, le système étant propre à :
- mesurer un signal représentatif d'une tension entre le collecteur et l'émetteur du transistor de puissance lorsque le transistor de puissance est passant,
- surveiller l'état de fonctionnement du transistor de puissance à partir des valeurs mesurées dudit signal, et
- commander la commutation du transistor de puissance vers un état de sécurité immédiatement en réponse à la détection d'un état anormal de fonctionnement,
caractérisé en ce que le système est également apte à :
- filtrer temporellement le signal mesuré de manière à éliminer toutes les perturbations transitoires dudit signal dont les durées sont inférieures à une durée prédéterminée, et
- détecter l'état anormal de fonctionnement à partir des valeurs du signal dans lequel les perturbations transitoires ont été filtrées.

L'invention sera mieux comprise à la lecture de la description qui va suivre, donnée uniquement à titre d'exemple et faite en se référant aux dessins sur lesquels :
- la figure 1 est une illustration schématique de la structure générale d'un dispositif à commutation électronique,
- la figure 2 est une illustration d'un système de commande d'un transistor de puissance conforme à l'invention,
- la figure 3 est un organigramme d'un procédé de commande d'un transistor de puissance conforme à l'invention,
- les figures 4A et 4B sont chacune une illustration schématique d'une perturbation affectant un transistor de puissance,
- la figure 5 est une illustration d'un second mode de réalisation d'un système de commande conforme à l'invention,
- la figure 6 est un organigramme d'un procédé de commande conforme à l'invention mis en oeuvre par le système de la figure 5, et
- les figures 7A, 7B et 7C sont des illustrations de perturbations affectant un transistor de puissance.

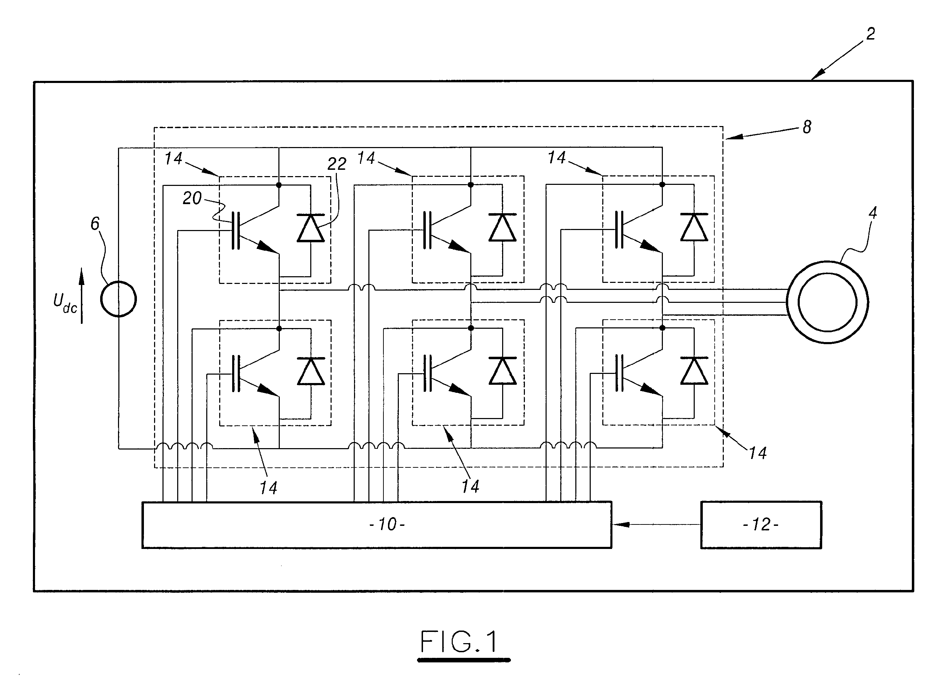

La figure 1 représente la structure générale d'un exemple d'un dispositif 2 à commutation électronique triphasée. Ce dispositif 2 comporte une machine électrique tournante 4 raccordée à une source 6 de tension continue par l'intermédiaire d'un onduleur triphasé 8. Le système 2 comporte également un allumeur 10 destiné à commander l'onduleur 8 en fonction de commandes transmises par un calculateur 12.

La machine électrique tournante 4 est par exemple un moteur électrique destiné à entraîner en rotation les roues motrices d'un véhicule telles que celles d'un train.

L'onduleur triphasé 8 est classique et formé de six blocs de commutation de la tension continue.

Chaque bloc de commutation est ici réalisé à l'aide d'un interrupteur de puissance 14. Chaque interrupteur 14 est capable de commuter des courants allant jusqu'à 1000 ampères. Pour atteindre de telles performances, cet interrupteur 14 est réalisé à partir de plusieurs transistors élémentaires de puissance raccordés en parallèle et de diodes élémentaires raccordées en position anti-parallèle entre le collecteur et l'émetteur de ces transistors élémentaires. Ces transistors élémentaires sont, par exemple, des transistors IGBT *(Insulated Gate Bipolar Transistor)* capables chacun de commuter un courant de 100 à 150 ampères, et de supporter une tension V_{CE} entre le collecteur et l'émetteur à l'état bloqué allant de 250 à 6500 volts. A l'état passant, de façon classique, la tension V_{CE} est inférieure à 5 volts.

Tous les transistors élémentaires d'un même interrupteur sont commandés de façon identique par le calculateur 12, de sorte qu'ils se comportent fonctionnellement comme un seul gros transistor raccordé en position anti-parallèle aux bornes d'une diode. Le schéma électrique équivalent de l'interrupteur 14 est donc formé d'un transistor 20 aux bornes duquel est raccordée une diode en position anti-parallèle 22. La suite de cette description sera effectuée uniquement en utilisant ce schéma électrique équivalent, de sorte que le terme transistor désigne uniquement le transistor 20.

L'allumeur 10 est propre à commander la commutation de chaque transistor 20 en fonction des instructions transmises par le calculateur 12. En particulier, il est apte à commander les transistors 20 de manière à délivrer à la machine 4 une tension triphasée correspondant soit au maintien de la vitesse du train, soit à une accélération ou à une décélération du train.

A cet effet, l'allumeur 10 est raccordé à la grille de chacun des transistors 20.

De plus, dans ce mode de réalisation, l'allumeur 10 est raccordé à chacun des transistors 20 de manière à mesurer un signal représentatif de la tension V_{CE} présente entre le collecteur et l'émetteur de chacun des transistors 20.

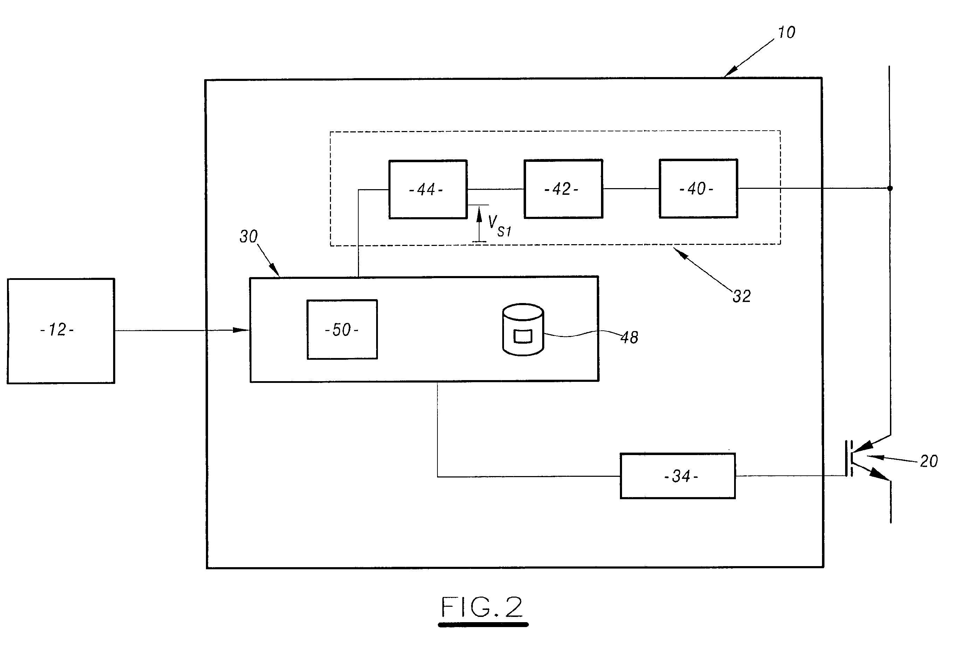

L'agencement de l'allumeur 10 pour commander la commutation des transistors 20 en fonction des instructions du calculateur 12 est classique et ne sera pas décrite ici plus en détail. Dans la suite de la description, seul l'agencement de cet allumeur 10, correspondant à un système de commande d'urgence de la commutation d'un transistor de puissance en cas de dysfonctionnement de ce dernier, est décrit ci-dessous en regard notamment de la figure 2.

La figure 2 représente l'allumeur 10 dans lequel est implanté un système de commande d'urgence des transistors 20. Le système de commande d'urgence étant le même pour chaque transistor 20, seul le système de commande d'urgence d'un seul transistor 20 est décrit ici en détail.

Le système de commande d'urgence est propre à détecter un état anormal de dysfonctionnement du transistor 20 et à commander le transistor 20 en réponse à la détection de cet état anormal pour le faire passer dans un état de sécurité, c'est-à-dire ici à l'état bloqué.

L'état anormal est ici défini comme étant une tension V_{CE} supérieure à un seuil S₁ pendant un intervalle de temps Δₜ. Dans l'exemple de réalisation décrit ici, la valeur du seuil S₁ est constante et égale à 10V et la valeur de l'intervalle Δₜ est constante et égale à 10 µs.

D'autres valeurs acceptables pour ce seuil S₁ sont comprises entre 5 et 45 V et d'autres valeurs acceptables pour l'intervalle Δₜ sont comprises entre 3 µs et 20 µs.

L'allumeur 10 comporte une unité 30 de traitement logique raccordée à un circuit 32 de détection de seuil et à une unité 34 de pilotage de la tension V_{GE} du transistor 20.

Le circuit 32 est destiné à détecter le franchissement du seuil S₁ par la tension V_{CE}. A cet effet, il comporte raccordé en série un abaisseur de tension 40, un pont 42 diviseur de tension et un comparateur analogique 44. L'abaisseur de tension 40 est propre à convertir la tension V_{CE} recueillie aux bornes du transistor 20 en une tension proportionnelle mais comprise entre 0 et 25 V.

Le pont diviseur de tension transforme la tension délivrée par l'abaisseur 40 en une tension proportionnelle mais comprise entre 0 et 5 V.

Finalement, le comparateur 44 est propre à comparer la tension délivrée par le pont 42 à une tension de référence V_{S1} correspondant à la valeur du seuil S₁, et à délivrer le résultat de cette comparaison sous la forme d'un signal tout ou rien à l'unité de traitement logique 30.

L'unité de pilotage 34 est destinée à commuter l'état du transistor 20 sous la commande de l'unité de traitement logique 30. A cet effet, l'unité de pilotage 34 est raccordée à la grille du transistor 20 pour piloter la tension V_{GE} de ce transistor 20. L'unité 34 est propre à délivrer une première tension apte à faire passer le transistor de l'état passant à l'état bloqué et une seconde tension apte à faire passer le transistor 20 de l'état bloqué à l'état passant.

Les première et seconde tensions sont par exemple respectivement égales à - 10 V et à + 15 V.

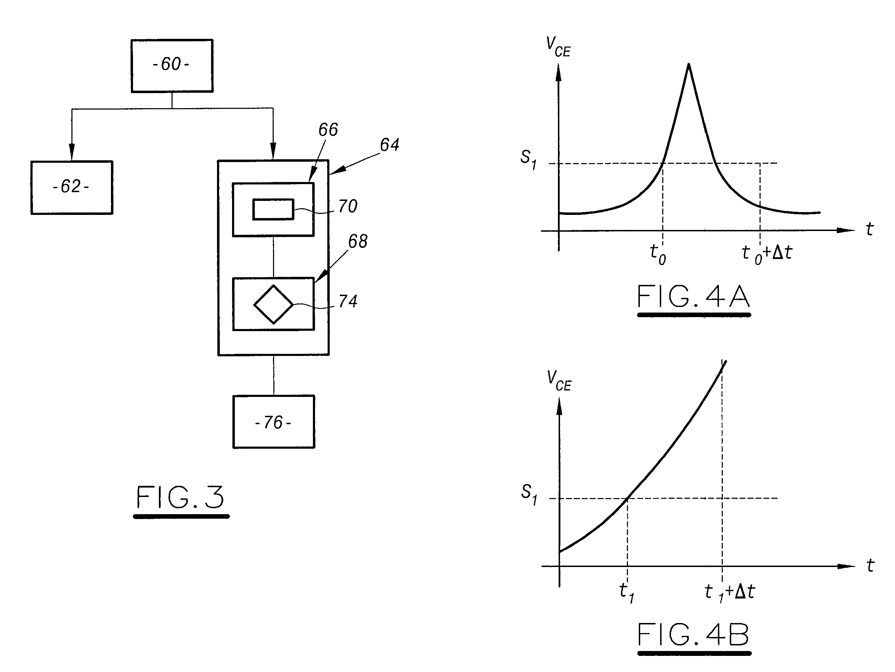

L'unité de traitement logique 30 est destinée à commander l'unité de pilotage 34 en fonction du résultat de là comparaison délivrée par le comparateur 44. L'unité 30 est ici une unité de traitement numérique de l'information programmable. Avantageusement et de manière à résister aux perturbations électromagnétiques dues à la proximité des transistors 20, cette unité 30 est réalisée à partir d'un composant CPLD *(Complex Programmable Logic Device)* programmé dans un langage VHDL *(Very High speed integrated circuit Hardware Description Language).* Ici, cette unité de traitement logique est adaptée et programmée pour mettre en oeuvre le procédé de la figure 3. En particulier, l'unité 30 comporte une mémoire 48 et un compteur de temps 50. La mémoire 48 contient la valeur de l'intervalle Δₜ défini précédemment. Cette valeur est ici constante tant que le système de commande d'urgence est actif.

Le fonctionnement de l'allumeur 10 va maintenant être décrit en regard du procédé de la figure 3.

Lors par exemple de la programmation du composant CPLD formant l'unité de traitement logique 30, une étape 60 d'initialisation de la valeur de l'intervalle de temps Δₜ est réalisée. Ici, cette étape consiste à enregistrer dans la mémoire 48 la valeur de 10 µs. La tension V_{S1} est ajustée lors de cette même étape.

Ensuite, une fois que l'allumeur 10 est activé, celui-ci procède, en permanence, à une étape 62 de mesure de la tension V_{CE}. Cette étape 62 est réalisée par l'abaisseur de tension 40 et le pont 42 diviseur de tension qui délivre, à l'entrée du comparateur 44, un signal représentatif de la tension V_{CE}.

Simultanément et parallèlement à l'étape 62, l'allumeur 10 réalise en permanence une étape 64 de surveillance de l'état de fonctionnement du transistor 20 lorsque celui-ci est passant.

Cette étape 64 comporte, principalement, une sous-étape 66 de filtrage temporel et une sous-étape 68 de détection de la présence d'un état anormal.

Lors de la sous-étape 66, le comparateur 44 réalise une opération de comparaison de la valeur du signal délivré par le pont 42 au seuil S₁ représenté par la tension V_{S1}. Le comparateur 44 délivre immédiatement le résultat de cette comparaison à l'unité de traitement logique 30 sous la forme d'un signal binaire ou TTL (Logique Transistor-Transistor) tel que, par exemple, 0 V pour indiquer que le seuil S₁ n'a pas été franchi et 5 V pour indiquer que le seuil S₁ a été franchi.

Lors de la sous-étape 66, l'unité de traitement logique 30 surveille en permanence la valeur du signal délivré par le comparateur 44 de manière à détecter immédiatement le début d'une perturbation. Le début d'une perturbation est ici détecté lorsque la valeur du signal délivré par le comparateur 44 passe à la valeur 5 V.

Dès que le début d'une perturbation a été détecté, l'unité 30 déclenche, lors de l'opération 70, le compteur de temps 50 et vérifie en permanence sa valeur. Si la valeur du compteur 50 est égale à l'intervalle Δₜ préenregistré, l'unité 30 procède à la sous-étape 68 de détection d'un état anormal de fonctionnement du transistor 20. Cette sous-étape 68 consiste ici à réaliser une opération 74 de comparaison de la valeur instantanée de la tension V_{CE} à un seuil S₂. De manière à simplifier le montage de l'allumeur 10, ce seuil S₂ est ici choisi égal au seuil S₁. Par conséquent, l'opération 70 consiste ici seulement à relever la valeur actuellement délivrée par le comparateur 44.

Si la valeur délivrée par le comparateur 44 indique que la tension V_{CE} est inférieure au seuil S₁, alors aucune commande particulière du transistor 20 n'est enclenchée. Dans le cas contraire, c'est-à-dire si la valeur délivrée par le comparateur 44 indique que la tension V_{CE} est toujours supérieure au seuil S₁, alors l'unité 30 procède immédiatement à une étape 76 de commande d'urgence de la commutation du transistor 20.

Lors de cette étape 76, l'unité 30 commande l'unité de pilotage 34 pour appliquer une tension égale à - 10 V sur la grille du transistor 20. En réponse à cette tension de - 10 V, le transistor 20 passe de l'état passant à l'état bloqué.

Dans le mode de réalisation décrit ici, l'étape 66 n'est réalisée qu'à partir du moment où l'allumeur 10 a reçu une instruction du calculateur 12 pour faire basculer le transistor 20 de l'état bloqué à l'état passant, et jusqu'à l'instant où l'allumeur 10 reçoit une nouvelle instruction du calculateur 12 pour faire passer le transistor 20 de l'état passant à l'état bloqué.

Les figures 4A et 4B représentent deux exemples de perturbation de la tension V_{CE}. Le graphique de la figure 4A représente une perturbation transitoire tandis que la figure 4B représente un état anormal de la tension V_{CE}.

Sur la figure 4A, à un instant t₀, la tension devient supérieure au seuil S₁ pendant un intervalle de temps inférieur à Δₜ. Dans ce cas de figure, l'allumeur 10 attend un intervalle de temps Δₜ après le premier franchissement par la tension V_{CE} du seuil S₁ avant d'exécuter la sous-étape 68 de détection.

Lors de l'exécution de la sous-étape 68, aucun état anormal n'est détecté puisque la tension V_{CE} est redevenue entre temps inférieure au seuil S₁. Par conséquent, les perturbations transitoires de la tension V_{CE} dont la durée est inférieure à Δₜ ne provoquent pas des déclenchements intempestifs de l'étape 76 de commande d'urgence du transistor 20. Ainsi, le procédé décrit filtre les perturbations dont la durée est inférieure à Δₜ sans pour autant nécessiter la mise en oeuvre d'algorithme de filtrage complexe.

Sur la figure 4B, la tension V_{CE} devient supérieure au seuil S₁ à l'instant t₁. Toutefois, dans le cas de figure représenté sur la figure 4B, la tension, après avoir franchi le seuil S₁, continue à augmenter. Par conséquent, à l'instant t₁ + Δₜ la tension V_{CE} est toujours supérieure au seuil S₁. Dans une telle situation, le procédé de la figure 3 conduit à déclencher l'étape 76 de commande d'urgence du transistor 20 puisqu'à l'instant t₁ + Δₜ l'unité 30 détecte un état anormal.

Il est important de remarquer que la valeur de l'intervalle Δₜ doit être choisie de manière à laisser suffisamment de temps à l'unité de pilotage 34 pour commuter le transistor 20 vers l'état bloqué avant que celui-ci ne soit définitivement détérioré à cause de cet état anormal. Pour la plupart des transistors de puissance utilisés, l'intervalle de temps Δₜ est sensiblement compris entre 3 µs et 20 µs.

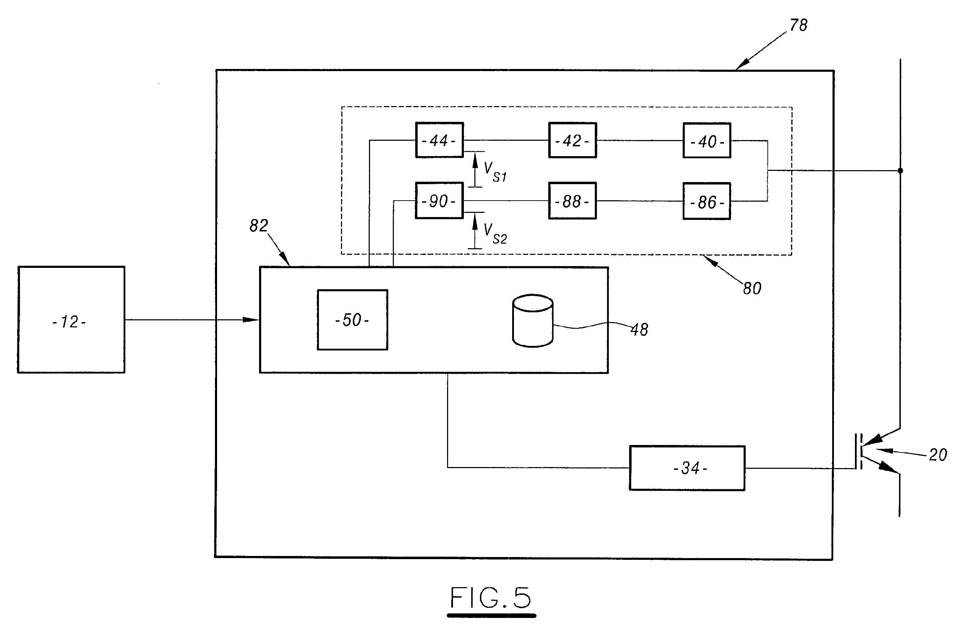

La figure 5 représente un second mode de réalisation 78 de l'allumeur 10. L'allumeur 78 est identique à celui décrit en regard de la figure 2 à l'exception du fait que le circuit de détection de seuil 32 et l'unité de traitement logique 30 sont respectivement remplacés par un circuit de détection de seuil 80 et une unité de traitement logique 82.

Les autres éléments déjà décrits en regard de la figure 2 portent sur la figure 5 les mêmes références.

Le circuit de détection de seuil 80 est propre à comparer la tension V_{CE} au seuil S₁ et aussi à un seuil S₂. Le circuit de comparaison de la tension V_{CE} au seuil S₁ est par exemple identique à celui décrit en regard de la figure 2 et porte ici les mêmes références numériques. Le circuit de comparaison de la tension V_{CE} au seuil S₂ est similaire au circuit de comparaison de la tension V_{CE} au seuil S₁. Il est ainsi formé par un abaisseur 86 de tension, un pont 88 diviseur de tension et un comparateur 90 raccordé en série. Les éléments 86, 88 et 90 étant classiques, ils ne seront pas décrits ici en détail. Le résultat de la comparaison de la tension V_{CE} au seuil S₂, représenté par une tension V_{S2}, est délivré à l'unité de traitement logique 82 sous la forme d'un signal TTL.

Le seuil S₂ correspond à une valeur de la tension V_{CE} au-delà de laquelle le transistor de puissance 20 risque d'être endommagé.

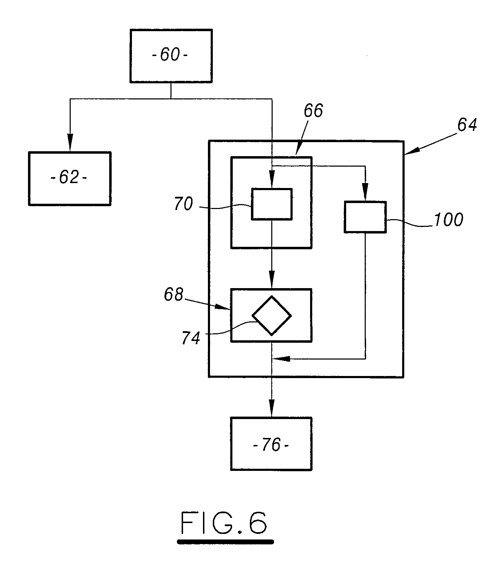

L'unité de traitement logique 82 est par exemple matériellement identique à l'unité de traitement logique 30 mais adaptée et programmée pour mettre en oeuvre le procédé de la figure 6.

Le procédé de la figure 6 est identique à celui décrit en regard de la figure 3 à l'exception du fait qu'il comporte une sous-étape 100 supplémentaire de prévention d'un état de fonctionnement destructif.

Cette sous-étape 100 est déclenchée par l'unité 82 en même temps que l'opération 70, c'est-à-dire dès que la valeur de la tension V_{CE} s'élève au-dessus du seuil S₁. Lors de cette sous-étape 100, le circuit de détection 80 compare en permanence la valeur de la tension V_{CE} au seuil S₂ et l'unité de traitement logique surveille le résultat de cette comparaison. Si le résultat délivré à l'unité de traitement logique 82 indique que la tension V_{CE} a dépassé le seuil S₂, lors de la sous-étape 100, alors l'unité 82 procède immédiatement à l'étape 76 de commande d'urgence du transistor de puissance. Cette sous-étape 100 est uniquement réalisée pendant toute la durée de l'intervalle de temps Δₜ. Une fois l'intervalle de temps Δₜ écoulé, la sous-étape 100 est désactivée.

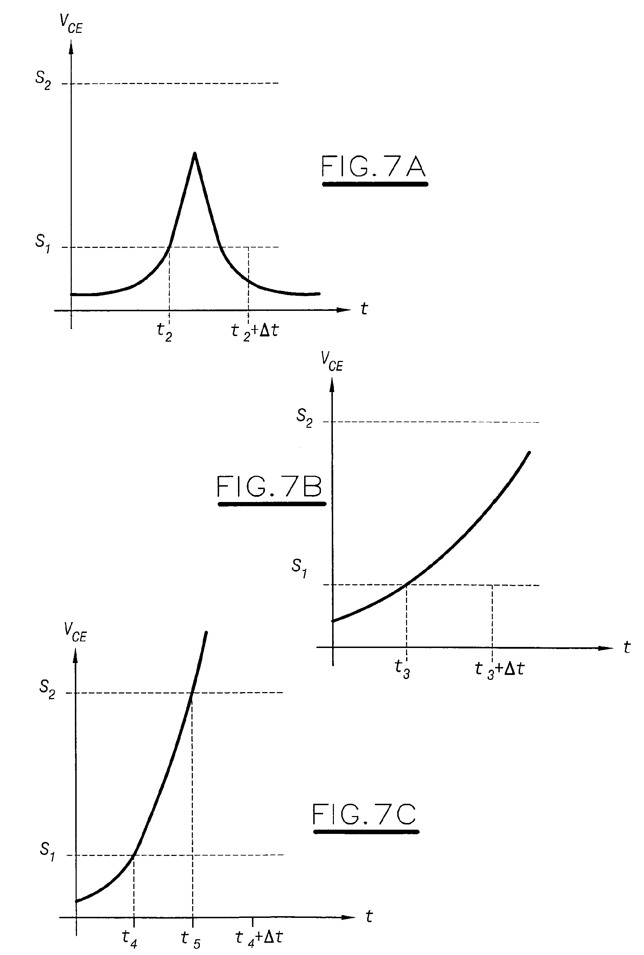

Le fonctionnement du système de commande d'urgence de la figure 5 va maintenant être illustré dans les cas particuliers des perturbations présentées aux figures 7A à 7C.

Les figures 7A à 7C présentent l'évolution de la tension V_{CE} en fonction du temps. Sur la figure 7A, la tension V_{CE} devient supérieure au seuil S₁ à l'instant t₂, passe ensuite par un maximum dont l'amplitude est inférieure au seuil S₂ et redescend ensuite avant l'instant t₂ + Δₜ en dessous du seuil S₁. Dans ce cas de figure, l'allumeur 78 se comporte exactement comme l'allumeur 10 et l'étape de commande d'urgence du transistor 20 n'est pas réalisée.

Sur la figure 7B, la tension V_{CE} s'élève au-dessus du seuil S₁ à l'instant t₃ et continue à croître progressivement jusqu'à l'instant t₃ +Δₜ. A cet instant t₃ +Δₜ, la valeur de la tension V_{CE} est inférieure au seuil S₂. Dans ce cas de figure, le fonctionnement de l'allumeur 78 est identique à celui de l'allumeur 10 décrit en regard de la figure 4B.

Sur la figure 7C, la tension V_{CE} dépasse le seuil S₁ à l'instant t₄ et s'accroît ensuite très rapidement pour dépasser le seuil S₂ à un instant t₅ strictement inférieur à l'instant t₄ +Δₜ. Dans cette situation, à l'instant t₅ l'allumeur 78, qui procède à la sous-étape 100, détecte que le seuil S₂ a été franchi par la tension V_{CE} et, par conséquent, exécute immédiatement l'étape 76 de commande d'urgence du transistor 20 sans attendre que l'intervalle de temps Δₜ se soit écoulé.

Le second mode de réalisation présente les mêmes avantages que celui décrit en regard des figures 2 et 3, c'est-à-dire qu'il ne déclenche pas de façon intempestive l'étape de commande d'urgence du transistor 20.

De plus, ce second mode de réalisation présente l'avantage de garantir qu'à l'instant où l'étape de commande d'urgence est réalisée, la tension V_{CE} est inférieure ou égale au seuil S₂, c'est-à-dire que la tension est encore suffisamment basse pour ne pas avoir, par exemple, endommagé le transistor 20. Ainsi, le choix de la valeur de l'intervalle de temps Δₜ s'en trouve facilité.

En variante, l'unité de traitement logique est adaptée pour mesurer la durée pendant laquelle la tension V_{CE} est supérieure au seuil S₁. Dans cette variante, l'unité de traitement logique est apte à utiliser la durée mesurée pour ajuster automatiquement le seuil S₁. Par exemple, l'unité de traitement logique est programmée pour décroître automatiquement la valeur du seuil S₁ lorsque la durée de la plupart des perturbations transitoires est très nettement inférieure à la valeur de l'intervalle Δₜ. Ainsi, dans cette variante, la valeur du seuil S₁ est optimisée.

De façon similaire à la variante précédente, le seuil S₂ et éventuellement l'intervalle de temps Δₜ sont également ajustés automatiquement par l'unité de traitement logique.

Le procédé a été décrit, ici, dans le cas particulier de la commande d'un interrupteur de puissance réalisé à partir de plusieurs transistors élémentaires. Toutefois, en variante, ce procédé est également applicable à la commande et au contrôle d'un seul transistor élémentaire, par exemple, du type IGBT, MOFSET ou FET.

Finalement, dans une variante plus compliquée à mettre en oeuvre, le circuit de détection de seuil est remplacé par un convertisseur analogique numérique propre à délivrer à l'unité de traitement logique la valeur de la tension V_{CE}. Dans cette variante, l'unité de traitement logique est programmée pour mettre en oeuvre des algorithmes de filtrage numérique classiques permettant d'éliminer les perturbations transitoires dont est affectée la tension V_{CE} avant de détecter la présence d'un état anormal à partir du signal ainsi filtré.

## Revendications

1. Procédé de commande d'urgence de la commutation d'un circuit, formant transistor de puissance (20), en cas de dysfonctionnement de ce circuit, comportant :
- une étape (62) de mesure d'un signal représentatif d'une tension entre le collecteur et l'émetteur du circuit lorsque le circuit est passant,
- une étape (64) de surveillance de l'état de fonctionnement du circuit à partir des valeurs mesurées dudit signal, et
- une étape (76) de commande de la commutation du circuit vers un état de sécurité, cette étape étant déclenchée immédiatement lorsqu'un état anormal de fonctionnement est détecté lors de l'étape de surveillance,
**caractérisé en ce que** l'étape (64) de surveillance comporte :
- une sous-étape (66) de filtrage temporel du signal mesuré de manière à éliminer toutes les perturbations transitoires dudit signal dont les durées sont inférieures à une durée prédéterminée,
- une sous-étape (68) de détection de l'état anormal de fonctionnement réalisée à partir des valeurs du signal dans lequel les perturbations transitoires ont été filtrées, et
- une sous-étape (100) de prévention d'un état de fonctionnement destructif consistant à déclencher immédiatement l'étape de commande (76) dès que la valeur instantanée dudit signal mesuré dépasse un premier seuil au-delà duquel le circuit (20) formant transistor de puissance risque d'être endommagé.

2. Procédé selon la revendication 1, **caractérisé en ce que** la sous-étape de filtrage temporel (66) consiste à détecter le début d'une perturbation transitoire et à ne réaliser la sous-étape (68) de détection qu'après que l'intervalle de temps prédéterminé se soit écoulé, l'intervalle de temps étant compté à partir de la détection du début de la perturbation.

3. Procédé selon la revendication 2, **caractérisé en ce que** le début de la perturbation est détecté en comparant la valeur instantanée du signal mesuré à un deuxième seuil.

4. Procédé selon la revendication 2 ou 3, **caractérisé en ce que** la sous-étape (68) de détection de l'état anormal comporte une opération (74) de comparaison de la valeur instantanée dudit signal mesuré avec un troisième seuil, et **en ce que** l'étape (76) de commande est déclenchée uniquement si le résultat de cette comparaison avec le troisième seuil indique que la perturbation est toujours présente après que l'intervalle de temps prédéterminé se soit écoulé.

5. Procédé selon l'une quelconque des revendications précédentes, **caractérisé en ce qu'**il comporte une étape (60) d'initialisation de l'intervalle de temps prédéterminé à une valeur constante avant de réaliser la sous-étape (66) de filtrage.

6. Procédé selon l'une quelconque des revendications 1 à 5, **caractérisé en ce qu'**il comporte une étape (60) d'initialisation du ou de chaque seuil à une valeur constante, avant la sous-étape de filtrage (66).

7. Procédé selon la revendication 1, **caractérisé :**
- **en ce que** la sous-étape de filtrage (66) comporte une opération de filtrage numérique dudit signal mesuré,
- **en ce que** la sous-étape de détection (68) comporte une opération de comparaison du signal filtré à un seuil prédéterminé, le résultat de cette comparaison étant représentatif de la présence ou de l'absence d'un état anormal de fonctionnement, et
- **en ce que** l'étape de commande (76) est déclenchée uniquement si le résultat de la comparaison indique qu'un état anormal de fonctionnement est présent.

8. Système (10 ; 78) de commande d'urgence de la commutation d'un circuit formant transistor de puissance, en cas de dysfonctionnement de ce circuit, le système (10 ; 78) comportant des moyens pour :
- mesurer (40, 42, 86, 88), un signal représentatif d'une tension entre le collecteur et l'émetteur du circuit lorsque le circuit est passant,
- surveiller l'état (44; 90) de fonctionnement du circuit à partir des valeurs mesurées dudit signal, et
- commander (34) la commutation du circuit vers un état de sécurité immédiatement en réponse à la détection d'un état anormal de fonctionnement,
**caractérisé en ce que** le système comporte également des moyens pour:
- filtrer (30 ; 82) temporellement le signal mesuré de manière à éliminer toutes les perturbations transitoires dudit signal dont les durées sont inférieures à une durée prédéterminée,
- détecter (30 ; 82) l'état anormal de fonctionnement à partir des valeurs du signal dans lequel les perturbations transitoires ont été filtrées, et
- prévenir un état de fonctionnement destructif en déclenchant immédiatement la commutation du circuit vers un état de sécurité dès que la valeur instantanée d'un signal mesuré par les moyens pour mesurer dépasse un premier seuil au-delà duquel le circuit formant transistor de puissance risque d'être endommagé.
